# EUROPÄISCHE PATENTSCHRIFT

(11) **EP 3 257 220 B1**
(45) Veröffentlichungstag und Bekanntmachung des Hinweises auf die Patenterteilung: **06.11.2019**
(21) Anmeldenummer: 16705732.2
(22) Anmeldetag: 08.02.2016
(51) Int. Cl.: H04L 29/06

(54) **VERFAHREN ZUR ÜBERTRAGUNG VON DATEN IN EINEM MULTIMEDIA-SYSTEM, SOWIE SOFTWAREPRODUKT UND SYSTEM ZUR STEUERUNG DER ÜBERTRAGUNG VON DATEN IN EINEM MULTIMEDIA-SYSTEM**
METHOD FOR TRANSMITTING DATA IN A MULTIMEDIA SYSTEM, AND SOFTWARE PRODUCT AND SYSTEM FOR CONTROLLING THE TRANSMISSION OF DATA IN A MULTIMEDIA SYSTEM
PROCÉDÉ DE TRANSMISSION DE DONNÉES DANS UN SYSTÈME MULTIMÉDIA, AINSI QUE PRODUIT LOGICIEL ET SYSTÈME DE COMMANDE DE LA TRANSMISSION DE DONNÉES DANS UN SYSTÈME MULTIMÉDIA

(30) Priorität: 09.02.2015 DE 102015001622
(43) Veröffentlichungstag der Anmeldung: 20.12.2017
(73) Patentinhaber: Unify GmbH & Co. KG, 80807 München (DE)
(72) Erfinder: KLUG, Karl, 83714 Miesbach (DE); KLEINER, Patrick, 81476 München (DE)
(74) Vertreter: Fritzsche, Thomas
(86) Internationale Anmeldenummer: PCT/EP2016/025007
(87) Internationale Veröffentlichungsnummer: WO 2016/128145

(56) Entgegenhaltungen:
- EP-A1- 2 448 265
- EP-A2- 0 898 424
- US-A1- 2011 161 836

## Beschreibung

Die Erfindung betrifft ein Verfahren zur Übertragung von Daten in einem Multimedia-System sowie ein Softwareprodukt und ein Multimedia-System zur Steuerung der Übertragung von Daten in einem Multimedia-System.

Als synchrone Kommunikation werden bisher Audio- und/ oder Video bezeichnet. Daneben sind E-Mail, Chat, IM, usw. (allgemein: Textkommunikation) als asynchrone Kommunikation bekannt. Synchrone Kommunikation bestand in der Vergangenheit nur aus Audio, Video oder Audio zusammen mit Video. Daneben bzw. parallel dazu gibt es die asynchrone Kommunikation z.B. in Textform, die einen semantischen Bezug zur synchronen Kommunikation hat. In der letzten Zeit kamen vielfältige neue Kommunikationsformen zum Einsatz wie z.B. E-Mail, SMS, Instant Messaging, Chat, Twitter, YouTube, Sensoring, QR-Tags, Digital Marking etc.. Alle diese Kommunikationsformen bilden zusammen einen dynamischen Kontext für die gerade laufende synchrone Kommunikation. Bisher sind diese verschiedenen Kommunikationsformen nicht synchronisiert, sondern müssen vom Benutzer manuell oder über Netzverfahren statisch gelöst werden (z.B. im Fall der gemanagten Videokonferenz). Selbst bei Videokonferenzen kommt es oft vor, dass wegen der Teilnahme von mobilen Teilnehmern Audio-Konferenzen parallel zu Video-Konferenzen durchgeführt werden, wobei die Lippensynchronität verlorengehen kann. Bisher können nur teure Video-Raumsysteme das Problem lokal im Konferenzraum lösen.

DE 60203779 T2 beschreibt eine Erweiterung von SDPng (ng: next generation), um mit Hilfe des sog. End-to-End Negotiation Protocols (E2ENP) eine End-to-End Dienstgüte (QoS) sicherzustellen, auch wenn mobile Endgeräte beteiligt sind. Die Übertragungsbedingungen mobiler Endgeräte sind zeitlich veränderlich und werden dynamisch angepasst. Dazu wird mit Hilfe von SDPng vorab ein Satz von Fähigkeiten, Qualitäten und Adaptionsmechanismen definiert, um ein Protokoll auf der Applikations-Ebene zu definieren.

Gemäß der US 2002154210 A1 erlaubt ein verteiltes Multimedia-Kollaborations-System die Übermittlung synchroner (Audio, Video) Kommunikation und asynchroner Kommunikation (Text, Grafik, E-Mail, Control).

Weitere Multimedia-Systeme beschreiben den Stand der Technik in den Veröffentlichungen EP 0 898 424, US 2011/0161836 sowie EP 2 448 265.

Bisher sind synchrone und asynchrone Kommunikation nicht oder nur manuell miteinander synchronisiert, obwohl sie parallel verwendet werden und einen gemeinsamen, dynamischen Kontext bilden. Dies betrifft besonders sog. "decomposed devices", bei denen Funktionalitäten, wie die Übertragung von Audio und Video, auf getrennte Geräte verteilt sind.

Es ist eine Aufgabe der vorliegenden Erfindung, ein verbessertes Verfahren zur Übertragung von Daten in einem Multimedia-System sowie ein Softwareprodukt und eine Vorrichtung zur Steuerung der Übertragung von Daten in einem Multimedia-System anzugeben. Diese sollen insbesondere in der Lage sein, die vorstehenden Nachteile im Stand der Technik wenigstens teilweise zu überwinden.

Die Aufgabe wird erfindungsgemäß, wenigstens in Teilaspekten, durch die Merkmale der unabhängigen Ansprüche, welche ein Verfahren zur Übertragung von Daten in einem Multimedia-System sowie ein Softwareprodukt und eine Vorrichtung zur Steuerung der Übertragung von Daten in einem Multimedia-System betreffen, gelöst. Vorteilhafte Ausführungsformen und Weiterbildungen der Erfindung sind in den Unteransprüchen angegeben.

Ein Vorteil der Erfindung besteht darin, dass ein Verfahren zur Übertragung von Daten in einem Multimedia-System sowie ein Softwareprodukt und eine Vorrichtung zur Steuerung der Übertragung von Daten in einem Multimedia-System geschaffen werden, die es ermöglichen, von senderseitigen Teilnehmerendgeräten in einem bestimmten zeitlichen Kontext gesendete Multimediadaten beim Empfang an einem oder mehreren empfängerseitigen Teilnehmerendgeräten entsprechend dem bestimmten zeitlichen Kontext wiederzugeben. Vorteilhafterweise wird eine Synchronisation von synchroner und asynchroner Kommunikation ermöglicht.

Ein erster Aspekt der Erfindung betrifft ein Verfahren zur Übertragung von Daten in einem Multimedia-System, welches eine Gruppe von Teilnehmerendgeräten umfasst, bei dem von in der Gruppe enthaltenen Teilnehmerendgeräten erzeugte Multimediadaten an ein oder mehrere in der Gruppe enthaltene Teilnehmerendgeräte übertragen und dort wiedergegeben werden, wobei eine zentrale Synchronisierungseinheit eine Zeitinformation enthaltende Synchronisierungskennzeichnungen erzeugt und an die in der Gruppe enthaltenen Teilnehmerendgeräte sendet, jedes in der Gruppe enthaltene Teilnehmerendgerät die Synchronisierungskennzeichnungen empfängt und die im Teilnehmerendgerät erzeugten Multimediadaten mit den empfangenen Synchronisierungskennzeichnungen versieht und die mit den empfangenen Synchronisierungskennzeichnungen versehenen Multimediadaten an die zentrale Synchronisierungseinheit sendet, die zentrale Synchronisierungseinheit die mit den Synchronisierungskennzeichnungen versehenen Multimediadaten empfängt und die in den Synchronisierungskennzeichnungen enthaltene Zeitinformation entsprechend einem zeitlichen Kontext der von den Teilnehmerendgeräten gesendeten Multimediadaten modifiziert und zur Wiedergabe an die Teilnehmerendgeräte sendet, und die mit den modifizierten Synchronisierungskennzeichnungen versehenen Multimediadaten an den Teilnehmerendgeräten empfangen und in dem der in den Synchronisierungskennzeichnungen enthaltenen, modifizierten zeitlichen Information entsprechenden, zeitlichen Kontext wiedergegeben werden.

Gemäß einer Ausführungsform ist es vorgesehen, dass die zentrale Synchronisierungseinheit die mit den Synchronisierungskennzeichnungen versehenen Multimediadaten empfängt und die in den Synchronisierungskennzeichnungen enthaltene Zeitinformation entsprechend Steuerinformationen modifiziert, welche die Eigenschaften der die Multimediadaten sendenden und empfangenden Teilnehmerendgeräte und die Eigenschaften des Übertragungsweges berücksichtigen.

Bei dieser Ausführungsform kann es vorgesehen sein, dass Steuerinformationen in einer an der zentralen Synchronisierungseinheit hinterlegten Steuertabelle enthalten sind, welche verwendet wird zur Erzeugung der Synchronisierungskennzeichnungen, wobei diese zumindest ein die Verwendungsart des Mediums in der Konversation beschreibendes Kontext-Tag, ein eine Ordnungseinheit aller von der zentralen Synchronisierungseinheit ZTU verwalteten Konversationen darstellendes Konversations-Tag, und ein die Art des Mediums beschreibendes Medien-Tag enthalten.

Gemäß einer Ausführungsform ist es vorgesehen, dass die Steuerinformationen, entsprechend denen die in den Synchronisierungskennzeichnungen enthaltene Zeitinformation modifiziert wird, dynamisch angepasst werden.

Die Multimediadaten können in Form von Datenpaketen übertragen und den Datenpaketen jeweilige Synchronisierungskennzeichnungen zugeordnet werden. Gemäß dieser Ausführungsform kann vorgesehen sein, dass Datenpakete übertragen werden, die eine unterschiedliche Zeitdauer aufweisen, wobei die Synchronisierungskennzeichnungen einer periodischen zeitlichen Reihenfolge entsprechend erzeugt werden, deren Periodendauer gleich oder kürzer ist als die Zeitdauer der Datenpakete mit der kürzesten Periodendauer.

Gemäß einer Ausführungsform ist es vorgesehen, dass die Synchronisierungskennzeichnungen einen Zeitstempel enthalten.

Gemäß einer anderen Ausführungsform ist es vorgesehen, dass die Synchronisierungskennnzeichnungen einen jeweiligen auf einen vereinbarten Startzeitpunkt bezogenen, der jeweiligen Zeit entsprechenden Zählwert enthalten.

Ein zweiter Aspekt der Erfindung betrifft ein Softwareprodukt gemäß Anspruch 9, das auf einem durch einen Computer lesbaren Medium gespeichert ist und das vorzugsweise direkt in den internen Speicher eines Computers, insbesondere einer zentralen Synchronisierungseinheit (ZTU), geladen werden kann und das Programmcodes eines Computerprogramms aufweist, das einen Computer zur Durchführung der Verfahrensschritte eines Verfahrens nach einem der vorstehenden Ausführungsbeispiele befähigt, wenn das Computerprogramm auf dem Computer ausgeführt wird.

Ein weiterer Aspekt der Erfindung betrifft ein Multimediasystem gemäß Anspruch 10 zur Steuerung der Übertragung von Daten in einem Multimedia-System, welches eine Gruppe von Teilnehmerendgeräten umfasst, wobei von in der Gruppe enthaltenen Teilnehmerendgeräten erzeugte Multimediadaten an ein oder mehrere in der Gruppe enthaltene Teilnehmerendgeräte übertragen und dort wiedergegeben werden, wobei die Vorrichtung eine zentrale Synchronisierungseinheit (ZTU) umfasst, welche zur Erzeugung von eine Zeitinformation enthaltenden Synchronisierungskennzeichnungen und zum Senden derselben an jedes der in der Gruppe enthaltenen Teilnehmerendgeräte vorgesehen ist, wobei die Teilnehmerendgeräte die Synchronisierungskennzeichnungen empfangen und die im Teilnehmerendgerät erzeugten Multimediadaten mit den empfangenen Synchronisierungskennzeichnungen versehen und die mit den empfangenen Synchronisierungskennzeichnungen versehenen Multimediadaten an die zentrale Synchronisierungseinheit senden, und die zentrale Synchronisierungseinheit zum Empfangen der mit den Synchronisierungskennzeichnungen versehenen Multimediadaten von den Teilnehmerendgeräten und zum Modifizieren der in den Synchronisierungskennzeichnungen enthaltenen Zeitinformation entsprechend einem zeitlichen Kontext der von den Teilnehmerendgeräten gesendeten Multimediadaten und zum Senden an die Teilnehmerendgeräte vorgesehen ist, wobei die mit den modifizierten Synchronisierungskennzeichnungen versehenen Multimediadaten zum Empfang an den Teilnehmerendgeräten und zur Wiedergabe in dem der in den Synchronisierungskennzeichnungen enthaltenen, modifizierten zeitlichen Information entsprechenden, zeitlichen Kontext vorgesehen sind.

Im Folgenden werden Ausführungsbeispiele der Erfindung anhand von Figuren näher beschrieben. Es zeigt:

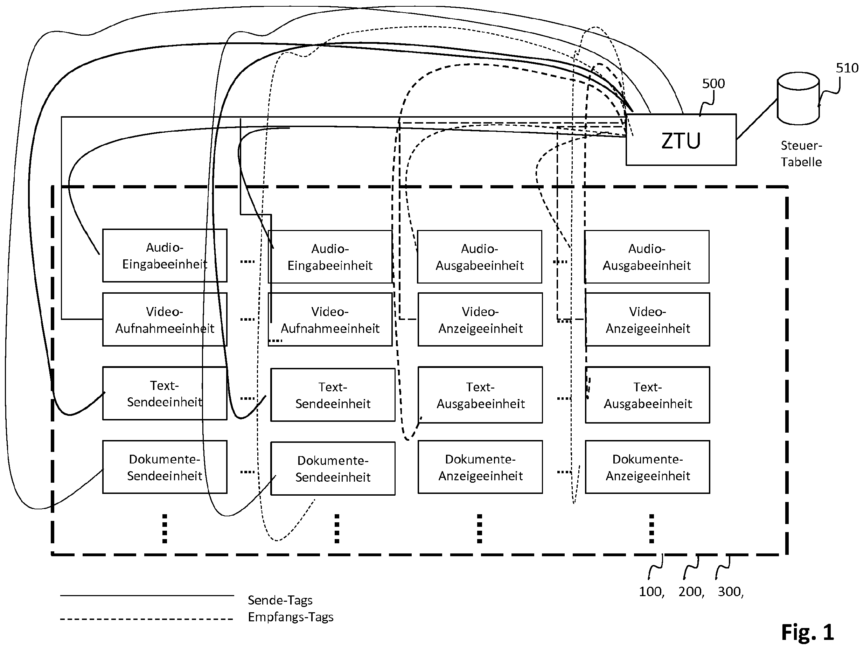

- Fig. 1: eine schematische Darstellung eines Teils eines Multimedia-Systems, bei dem Multimediadaten an einem Endgerät, das aus mehreren Ein- und Ausgabeinstanzen für verschiedene Medientypen besteht, z.B. ein Großraum-Videosystem mit einer Großleinwand und mehreren kleineren Bildschirmen sowie verschiedenen im Raum angeordneten Mikrofonen und mehreren im Raum angeordneten Lautsprechern, gemäß einem Ausführungsbeispiel des erfindungsgemäßen Verfahrens durch eine zentrale Synchronisierungseinheit (ZTU) synchronisiert werden;

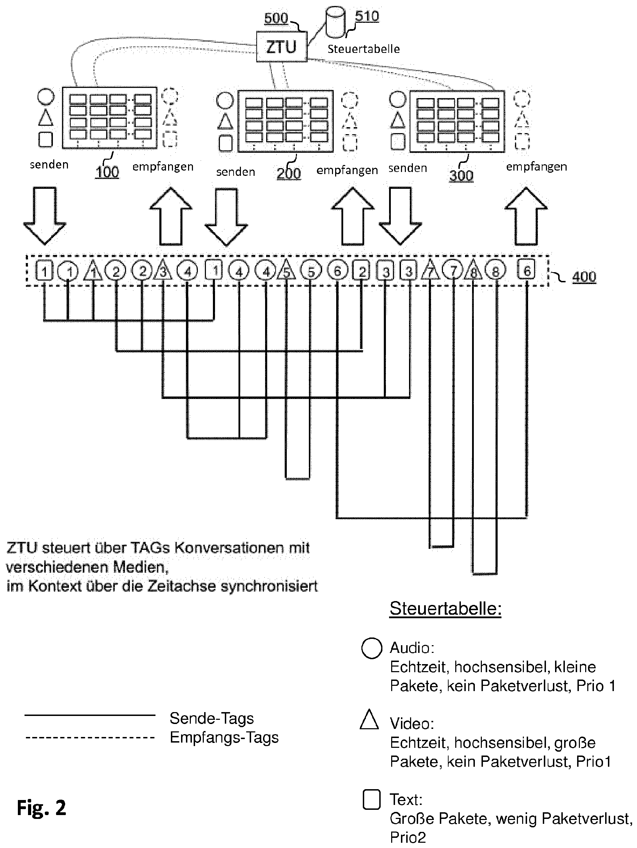

- Fig. 2: ein Blockdiagramm eines Ausführungsbeispiels der Erfindung, bei dem eine zentrale Synchronisierungseinheit (ZTU) über Synchronisierungskennzeichnungen (Tags) Multimediadaten enthaltende Konversationen mit verschiedenen Medien im Kontext synchronisiert.

Die Figuren sind schematisch und nicht maßstabsgetreu. Die zeichnerischen Darstellungen und Beschreibungen sind lediglich zur beispielhaften Veranschaulichung gedacht und sollen in keiner Weise einschränkend verstanden werden. Begriffe und Konzepte, die der Fachmann aus dem Stand der Technik verstehen und anwenden kann, werden nachstehend nicht im Einzelnen erläutert.

In Fig. 1 ist in einer schematischen Darstellung ein Teil eines Multimedia-Systems gezeigt, das aus mehreren Ein- und Ausgabeinstanzen in Form einer Gruppe von Endgeräten 100, 200, 300 für verschiedene Medientypen besteht. Von den Endgeräten 100, 200, 300 ist in Fig. 1 nur eines dargestellt.

Das Multimedia-System umfasst, wie später anhand der Fig. 2 beschrieben wird, eine Gruppe von Teilnehmerendgeräten 100, 200, 300, so dass von in der Gruppe enthaltenen Teilnehmerendgeräten erzeugte Multimediadaten an ein oder mehrere in der Gruppe enthaltene Teilnehmerendgeräte übertragen und dort wiedergegeben werden. Dies können z.B. ein Großraum-Videosystem mit einer Großleinwand und mehreren kleineren Bildschirmen sowie verschiedenen im Raum angeordneten Mikrofonen und mehreren im Raum angeordneten Lautsprechern sein. Die oder einige der Endgeräte 100, 200, 300 können aber auch Mobiltelefone, Video- oder PC-Kameras oder ähnliches umfassen.

Die Endgeräte 100, 200, 300 beinhalten bei dem gezeigten Ausführungsbeispiel, wie in Fig. 1 angegeben, jeweils eine Audio-Eingabeeinheit, eine Video-Aufnahmeeinheit, eine Text-Sendeeinheit und eine Dokument-Sendeeinheit sowie eine Audio-Ausgabeeinheit, eine Video-Anzeigeeinheit, eine Text-Ausgabeeinheit und eine Dokument-Anzeigeeinheit.

Zum Zwecke einer Synchronisation der Multimediadaten ist eine zentrale Synchronisierungseinheit (auch kurz "ZTU") 500 dazu vorgesehen, eine Zeitinformation enthaltende Synchronisierungskennzeichnungen zu erzeugen und an die oder zumindest die für den Empfang der Multimediadaten vorgesehenen, in der Gruppe enthaltenen Teilnehmerendgeräte 100, 200, 300 zu senden.

Eine Synchronisierungskennzeichnung, im Folgenden als "Synchronisierungs-Tag" oder - insbesondere in Zusammensetzungen - kurz als "Tag" (von Engl. "tag" = Etikett) bezeichnet, besteht bei dem hier beschriebenen Ausführungsbeispiel aus drei logischen Segmenten, die hier als "Kontext-Tag", "Konversations-Tag" und "Medien-Tag" bezeichnet werden sollen. Ein Kontext-Tag beschreibt die Verwendungsart des Mediums in einer Konversation (z.B. real-time communication, static-communication, streaming-dataflow, etc.). Ein Konversations-Tag stellt eine Ordnungseinheit aller von der ZTU 500 verwalteten Konversationen dar (z.B. ZTUxxx-nnnnn). Ein Medien-Tag beschreibt die Art des Mediums (z.B. dynamic video, streaming video, audio, podcast, text, document, image o.ä.). Es ist ein Tag in Sende- und Empfangsrichtung jeweils pro Medientyp vorgesehen.

Die Synchronisierungs-Tags werden je nach Art des Kommunikationsumfelds entweder manuell oder automatisch erzeugt und in einer Datenbank hinterlegt. Ein Konversations-Tag kann entsprechend als eine Konkatenation aus einem der ZTU 500 zugeordneten Namen und einer durchlaufenden Nummerierung sein, z.B. ZTU001-0027.

Wie nun anhand der Fig. 2 beschrieben, sendet die zentrale Synchronisierungseinheit (ZTU) 500 die die Zeitinformation enthaltenden Synchronisierungs-Tags an die in der Gruppe enthaltenen Teilnehmerendgeräte, von denen in Fig. 2 zum Zwecke der besseren Übersichtlichkeit nur drei Teilnehmerendgeräte 100, 200, 300 der in Fig. 1 gezeigten Art dargestellt sind.

Wie bereits eingangs erläutert, sollen in dem Multimedia-System von einem oder mehreren der in der Gruppe enthaltenen Teilnehmerendgeräte 100, 200, 300 erzeugte Multimediadaten an ein oder mehrere in der Gruppe enthaltene andere der Teilnehmerendgeräte 100, 200, 300 übertragen und dort wiedergegeben werden.

Wie in Fig. 1 und 2 schematisch mittels durchgezogenen Linien dargestellt, sendet die zentrale Synchronisierungseinheit 500 die Synchronisierungs-Tags an jedes (oder zumindest die zum Senden von Multimediadaten vorgesehenen) in der Gruppe enthaltenen Teilnehmerendgeräte 100, 200, 300, und jedes dieser Teilnehmerendgeräte 100, 200, 300 empfängt die Synchronisierungs-Tags und versieht die im jeweiligen Teilnehmerendgerät 100, 200, 300 erzeugten Multimediadaten mit den empfangenen TagS und sendet dann die mit den empfangenen Synchronisierungs-Tags versehenen Multimediadaten an die zentrale Synchronisierungseinheit 500.

Die zentrale Synchronisierungseinheit 500 empfängt die mit den Synchronisierungs-Tags versehenen Multimediadaten und modifiziert die in den Synchronisierungs-Tags enthaltene Zeitinformation entsprechend einem zeitlichen Kontext der von den Teilnehmerendgeräten gesendeten Multimediadaten und sendet dann die mit den modifizierten Synchronisierungs-Tags versehenen Multimediadaten zumindest an die Teilnehmerendgeräte in der Gruppe der Teilnehmerendgeräte 100, 200, 300, in welchen die Multimediadaten wiedergegeben werden sollen. Die Übertragung der modifizierten Empfangs-Tags an die Teilnehmerendgeräte 100, 200, 300 ist in den Fig. 1 und 2 schematisch mittels gestrichelten Linien dargestellt.

In den Teilnehmerendgeräten in der Gruppe der Teilnehmerendgeräte 100, 200, 300, für die die Multimediadaten zur Wiedergabe bestimmt sind, werden die mit den modifizierten Synchronisierungs-Tags versehenen Multimediadaten empfangen und in dem der modifizierten zeitlichen Information entsprechenden zeitlichen Kontext wiedergegeben. Mit anderen Worten, die zentrale Synchronisierungseinheit 500 steuert die Medienströme so, dass Datenpakete mit in den Synchronisierungs-Tags enthaltener gleicher modifizierter zeitlicher Information in einem entsprechenden zeitlichen Kontext wiedergegeben werden, d.h. an die Ausgabeeinheiten synchron bzw. zeitgleich angeboten werden. Mit "synchron bzw. zeitgleich" ist eine Wiedergabe im Sinne einer Erfüllung eines entsprechenden zeitlichen Kontexts zu verstehen, nicht notwendigerweise im Sinne von streng "gleichzeitig".

Durch Pufferung wird sichergestellt, dass aufgrund von unterschiedlichen Übertragungs- oder Verarbeitungszeitdauern zu unterschiedlichen Zeiten bzw. verspätet ankommende Medienpakete für den gleichen Zeitraum zusammengefasst werden, um dann gleichzeitig zur Ausgabe zur Verfügung gestellt zu werden. Dies kann bei verschiedenen Einheiten geschehen, z.B. für eine Dokumentationsspeicherung, beim Client, bei der Konferenzeinheit.

Die Zeitinformation, die bei dem hier beschriebenen Ausführungsbeispiel in Form eines Zeitstempels vorgesehen ist, wird so gewählt, dass der Zeitstempel synchron zum kürzesten Zeitintervall eingetragen wird, was vom benutzen Medienkanal abhängig ist. Bei Video ist ein Zeitstempel von z.B. 30 ms sinnvoll. Die Synchronisierungseinheit 500 trägt in die Zeitstempel der asynchron ankommenden Medienpakete den modifizierten zentralisierten Zeitstempel ein. Dazu kann man standardisierte Protokollelemente nutzen, wie z.B. das RTC-P-Protokoll, das bei SIP und WebRTC Verwendung findet.

Die Multimediadaten können in Form von Datenpaketen übertragen und den Datenpaketen jeweilige Synchronisierungskennzeichnungen zugeordnet werden.

Es können Datenpakete übertragen werden, die eine unterschiedliche Zeitdauer aufweisen, wobei die Synchronisierungs-Tags einer periodischen zeitlichen Reihenfolge entsprechend erzeugt werden, deren Periodendauer gleich oder kürzer ist als die Zeitdauer der Datenpakete mit der kürzesten Periodendauer, z.B. der oben im Zusammenhang mit Video genannten 30 ms.

Alternativ dazu, dass die Synchronisierungskennzeichnungen einen Zeitstempel enthalten, kann es vorgesehen sein, dass die Synchronisierungs-Tags nach Art einer plesiochronen Taktung einen jeweiligen auf einen vereinbarten Startzeitpunkt bezogenen, der jeweiligen Zeit entsprechenden Zählwert enthalten.

Die zentrale Synchronisierungseinheit 500 empfängt die mit den Synchronisierungs-Tags versehenen Multimediadaten und modifiziert die in den Synchronisierungs-Tags enthaltene Zeitinformation entsprechend Steuerinformationen, welche die Eigenschaften der die Multimediadaten sendenden und empfangenden Teilnehmerendgeräte 100, 200, 300 und die Eigenschaften des Übertragungsweges berücksichtigen, der in Fig. 2 mit dem Bezugszeichen 400 dargestellt ist.

Bei dem hier beschriebenen Ausführungsbeispiel sind die Steuerinformationen in einer an der zentralen Synchronisierungseinheit hinterlegten Steuertabelle 510 enthalten. Sie werden verwendet zur Erzeugung der Synchronisierungs-Tags. Diese können, wie bereits weiter oben erläutert, ein die Verwendungsart des Mediums in der Konversation beschreibendes Kontext-Tag, ein eine Ordnungseinheit aller von der zentralen Synchronisierungseinheit ZTU verwalteten Konversationen darstellendes Konversations-Tag, und ein die Art des Mediums beschreibendes Medien-Tag enthalten. Die Steuerinformationen, entsprechend denen die in den Synchronisierungs-Tags enthaltene Zeitinformation modifiziert wird, wird vorzugsweise dynamisch angepasst.

Die Tags werden je nach Art des Kommunikationsumfelds entweder manuell oder automatisch erzeugt und in der Steuertabelle nach Art einer Datenbank hinterlegt. Ein Konversations-Tag kann entsprechend als eine Konkatenation aus dem Namen der ZTU 500 und einer durchlaufenden Nummerierung dargestellt sein, z.B. ZTU001-0027.

In Fig. 2 sind auf dem Übertragungsweg 400 zu einer bestimmten Konversation gehörende Mediendaten, also Mediendaten, die in einem gemeinsamen zeitlichen Kontext stehen, mit gleichen Ziffern gekennzeichnet. Es sind also acht Konversationen mit den Ziffern 1 ... 8 dargestellt. Die Form der Umrandung der Ziffern, also Rechteck, Kreis oder Dreieck bedeuten den Medientyp sowie die Zeitanforderung und Priorisierung bezüglich ihrer Übertragung. So bedeutet eine kreisförmige Umrandung "Audio" mit den Parametern: Echtzeit, hochsensibel, kleine Pakete, kein Paketverlust, Prio = 1. Eine dreieckige Umrandung bedeutet "Video" mit den Parametern: Echtzeit, hochsensibel, große Pakete, kein Paketverlust, Prio = 1, und eine rechteckige Umrandung bedeutet "Text" mit den Parametern: große Pakete, wenig Paketverlust, Prio = 2. Prio = 1 bedeutet Vorrang gegenüber Prio = 2.

Der Ablauf einer Datenübertragung im Multimedia-System kann wie folgt veranschaulicht werden: In einem ersten Schritt erfragt die zentrale Synchronisierungseinheit (ZTU) 500 von allen Einheiten der in der Gruppe enthaltenen Endgeräte 100, 200, 300 das jeweilige Profil der Medienströme. Daraus erstellt die ZTU 500 ein Sende-Tag (S-Tag), das sich aus den oben erläuterten Komponenten Kontext-, Konversations- und Medien-Tag zusammensetzt. Das S-Tag wird von der ZTU 500 periodisch an die (Eingabe-) Einheiten der Endgeräte 100, 200, 300 gesendet, die dann ihrerseits ihre Medienströme mit demselben Tag versehen und senden. Die Laufzeiten von der ZTU 500 an die Endgeräte ist vernachlässigbar. Die Periode der kürzesten Periode eines Mediums entspricht z.B. 30 ms. Zur Minimierung des Nachrichtenaufkommens kann, wie oben schon erwähnt, auch ein Startzeitpunkt, eine Periodendauer und eine Anzahl von Perioden an die Endgeräte 100, 200, 300 übergeben werden.

Die zentrale Synchronisierungseinheit 500 steuert die Medienströme so, dass die Pakete (Daten, Audio, Video, Streaming, IM, Chat,...) mit einem Tag im sendenden Endgerät 100, 200, 300 bei der Erzeugung gekennzeichnet und Paket und Tag als ein erweitertes Paket gesendet werden. Die ZTU 500 ist eine Art Work-Flow-Engine, die tabellengesteuert arbeitet. In der Steuertabelle 510 ist hinterlegt, in welcher Sequenz die jeweiligen Empfangs-Tags (E-Tags) zu den für den Empfang vorgesehenen der Endgeräte 100, 200, 300 verschickt werden. Dadurch wird eine chronologische Ordnung der zu einem bestimmten Kommunikationskontext gehörenden Medientypen erreicht, sodass z.B. im System keine Überholvorgänge entstehen. Die Synchronisierungseinheit 500 steuert die Medienströme daher so, dass z.B. Pakete mit gleichem Zeitstempel den Ausgabeeinheiten der für den Empfang vorgesehenen Endgeräte 100, 200, 300 gleichzeitig angeboten werden.

Unterschiedliche Verarbeitungszeiten an verschiedenen zu synchronisierenden Endgeräten 100, 200, 300 (z.B. Video und Mobilphone) werden in der Steuertabelle berücksichtigt und können ggf. dynamisch angepasst werden.

Dass die Endgeräte (z.B. Video und Mobilphone) keine gemeinsame bzw. übereinstimmende Zeitbasis haben (d.h. jedes Endgerät hat seine eigene "Uhr", die aber nicht synchronisiert sind), wird dadurch berücksichtigt, dass die Endgeräte den von der zentralen Synchronisierungseinheit 500 erhaltenen Tag replizieren. Die ZTU 500 ist somit eine zentrale Synchronisationsinstanz, die mehrere teilweise linear unabhängige Medienströme zu einem Kontext konsolidiert.

Die Eingabeeinheiten der Endgeräte 100, 200, 300 senden ihre Datenpakete mit dem jeweiligen Tag an die ZTU 500. Sind alle zu einem Tag gehörigen Datenpakete eingetroffen, erzeugt die ZTU 500 ein E-Tag (Empfangs-Tag), ersetzt damit das S-Tag in den Datenpaketen und sendet die Datenpakete an den/die Empfänger in Form der Endgeräte 100, 200, 300. Auf diese Art und Weise werden die Medien-Datenströme aus unterschiedlichen, physikalisch voneinander unabhängigen Datenquellen eines Endpunktes synchronisiert, sodass auch eine Lippensynchronisation zwischen dem Video-Datenstrom einer Kamera und dem davon unabhängigen Audio-Datenstrom eines Telefons erzielt wird.

Alternativ kann an Stelle oder zusätzlich zur zentralen Synchronisierungseinheit (ZTU) 500 eine Lokale Synchronisierungseinheit (LTU) verwendet werden, die für die Synchronisation der Datenströme eines einzigen Endpunktes zuständig ist. Ein "decomposed device" erscheint zusammen mit seiner solchen LTU wie ein physikalisch einheitliches Endgerät.

## Patentansprüche

1. Verfahren zur Übertragung von Daten in einem Multimedia-System, welches eine Gruppe von Teilnehmerendgeräten (100, 200, 300) umfasst, bei dem von in der Gruppe enthaltenen Teilnehmerendgeräten erzeugte Multimediadaten an ein oder mehrere in der Gruppe enthaltene Teilnehmerendgeräte übertragen und dort wiedergegeben werden, wobei
eine zentrale Synchronisierungseinheit (500) eine Zeitinformation enthaltende Synchronisierungskennzeichnungen erzeugt und an die in der Gruppe enthaltenen Teilnehmerendgeräte (100, 200, 300) sendet,
jedes in der Gruppe enthaltene Teilnehmerendgerät (100, 200, 300) die Synchronisierungskennzeichnungen empfängt und die im Teilnehmerendgerät erzeugten Multimediadaten mit den empfangenen Synchronisierungskennzeichnungen versieht und die mit den empfangenen Synchronisierungskennzeichnungen versehenen Multimediadaten an die zentrale Synchronisierungseinheit (500) sendet,
die zentrale Synchronisierungseinheit (500) die mit den Synchronisierungskennzeichnungen versehenen Multimediadaten empfängt und die in den Synchronisierungskennzeichnungen enthaltene Zeitinformation entsprechend einem zeitlichen Kontext der von den Teilnehmerendgeräten (100, 200, 300) gesendeten Multimediadaten modifiziert und zur Wiedergabe an die Teilnehmerendgeräte sendet, und
die mit den modifizierten Synchronisierungskennzeichnungen versehenen Multimediadaten an den Teilnehmerendgeräten (100, 200, 300) empfangen und in dem der in den Synchronisierungskennzeichnungen enthaltenen, modifizierten zeitlichen Information entsprechenden, zeitlichen Kontext wiedergegeben werden.

2. Verfahren nach Anspruch 1, **dadurch gekennzeichnet, dass** die zentrale Synchronisierungseinheit (500) die mit den Synchronisierungskennzeichnungen versehenen Multimediadaten empfängt und die in den Synchronisierungskennzeichnungen enthaltene Zeitinformation entsprechend Steuerinformationen modifiziert, welche die Eigenschaften der die Multimediadaten sendenden und empfangenden Teilnehmerendgeräte (100, 200, 300) und die Eigenschaften des Übertragungsweges (400) berücksichtigen.

3. Verfahren nach Anspruch 2, **dadurch gekennzeichnet, dass** die Steuerinformationen in einer an der zentralen Synchronisierungseinheit (500) hinterlegten Steuertabelle (510) enthalten sind, welche verwendet wird zur Erzeugung der Synchronisierungskennzeichnungen, die zumindest ein die Verwendungsart des Mediums in der Konversation beschreibendes Kontext-Tag, ein eine Ordnungseinheit aller von der zentralen Synchronisierungseinheit ZTU verwalteten Konversationen darstellendes Konversations-Tag, und ein die Art des Mediums beschreibendes Medien-Tag enthalten.

4. Verfahren nach Anspruch 2 oder 3, **dadurch gekennzeichnet, dass** die Steuerinformationen, entsprechend denen die in den Synchronisierungskennzeichnungen enthaltene Zeitinformation modifiziert wird, dynamisch angepasst werden.

5. Verfahren nach einem der Ansprüche 1 bis 4, bei dem die Multimediadaten in Form von Datenpaketen übertragen und den Datenpaketen jeweilige Synchronisierungskennzeichnungen zugeordnet werden.

6. Verfahren nach Anspruch 5, bei dem Datenpakete übertragen werden, die eine unterschiedliche Periodendauer aufweisen, wobei die Synchronisierungskennzeichnungen einer periodischen zeitlichen Reihenfolge entsprechend erzeugt werden, deren Periodendauer gleich oder kürzer ist als die Periodendauer der Datenpakete mit der kürzesten Periodendauer.

7. Verfahren nach einem der Ansprüche 1 bis 6, **dadurch gekennzeichnet, dass** die Synchronisierungskennzeichnungen einen Zeitstempel enthalten.

8. Verfahren nach einem der Ansprüche 1 bis 6, **dadurch gekennzeichnet, dass** die Synchronisierungskennzeichnungen einen jeweiligen auf einen vereinbarten Startzeitpunkt bezogenen, der jeweiligen Zeit entsprechenden Zählwert enthalten.

9. Softwareprodukt, das auf einem durch einen Computer lesbaren Medium gespeichert ist und Programmcodes eines Computerprogramms aufweist, die, wenn sie in den Speicher eines Computersgeladen werden, den Computer befähigen zur Durchführung eines Verfahrens zur Übertragung von Daten in einem Multimedia-System, welches eine Gruppe von Teilnehmerendgeräten (100, 200, 300) umfasst, bei dem von in der Gruppe enthaltenen Teilnehmerendgeräten erzeugte Multimediadaten an ein oder mehrere in der Gruppe enthaltene Teilnehmerendgeräte übertragen und dort wiedergegeben werden, wenn das Computerprogramm auf dem Computer ausgeführt wird, wobei das Verfahren die folgenden Schritte beinhaltet:
Erzeugen, durch die zentrale Synchronisierungseinheit (500), von Zeitinformation enthaltenden Synchronisierungskennzeichnungen und Senden der Zeitinformation enthaltenden Synchronisierungskennzeichnungen an die in der Gruppe enthaltenen Teilnehmerendgeräte (100, 200, 300), so dass jedes in der Gruppe enthaltene Teilnehmerendgerät (100, 200, 300) die Synchronisierungskennzeichnungen empfangen kann und die im Teilnehmerendgerät erzeugten Multimediadaten mit den empfangenen Synchronisierungskennzeichnungen versehen kann und die mit den empfangenen Synchronisierungskennzeichnungen versehenen Multimediadaten an die zentrale Synchronisierungseinheit (500) senden kann,
- Empfangen, durch die zentrale Synchronisierungseinheit (500), der mit den Synchronisierungskennzeichnungen versehenen Multimediadaten und Modifizieren der in den Synchronisierungskennzeichnungen enthaltene Zeitinformation entsprechend einem zeitlichen Kontext der von den Teilnehmerendgeräten (100, 200, 300) gesendeten Multimediadaten und Senden modifizierten Multimediadaten zur Wiedergabe an die Teilnehmerendgeräte.

10. Multimedia-System, umfassend eine Gruppe von Teilnehmerendgeräten (100, 200, 300) und eine Vorrichtung zur Steuerung der Übertragung von Daten in dem Multimedia-System , wobei von in der Gruppe enthaltenen Teilnehmerendgeräten erzeugte Multimediadaten an ein oder mehrere in der Gruppe enthaltene Teilnehmerendgeräte übertragen und dort wiedergegeben werden, wobei die Vorrichtung eine zentrale Synchronisierungseinheit (500) umfasst, welche zur Erzeugung von eine Zeitinformation enthaltenden Synchronisierungskennzeichnungen und zum Senden derselben an jedes der in der Gruppe enthaltenen Teilnehmerendgeräte (100, 200, 300) vorgesehen ist, wobei die Teilnehmerendgeräte dazu ausgebildet sind die Synchronisierungskennzeichnungen zu empfangen und die im Teilnehmerendgerät erzeugten Multimediadaten mit den empfangenen Synchronisierungskennzeichnungen zu versehen und die mit den empfangenen Synchronisierungskennzeichnungen versehenen Multimediadaten an die zentrale Synchronisierungseinheit zu senden, und
dass die zentrale Synchronisierungseinheit (500) zum Empfangen der mit den Synchronisierungskennzeichnungen versehenen Multimediadaten von den Teilnehmerendgeräten (100, 200, 300) und zum Modifizieren der in den Synchronisierungskennzeichnungen enthaltene Zeitinformation entsprechend einem zeitlichen Kontext der von den Teilnehmerendgeräten gesendeten Multimediadaten und zum Senden an die Teilnehmerendgeräte vorgesehen ist,
wobei die mit den modifizierten Synchronisierungskennzeichnungen versehenen Multimediadaten zum Empfang an den Teilnehmerendgeräten (100, 200, 300) und zur Wiedergabe in dem der in den Synchronisierungskennzeichnungen enthaltenen, modifizierten zeitlichen Information entsprechenden, zeitlichen Kontext vorgesehen sind.

## Claims

1. A method for transmitting data in a multimedia system, which comprises a group of user terminal devices (100, 200, 300), where multimedia data generated by the user terminal devices contained in the group are transmitted to one or more user terminal devices contained in the group and are reproduced there, wherein
a central synchronizing unit (500) generates synchronizing identifications containing time information and sends them to the user terminal devices (100, 200, 300) contained in the group, each user terminal device (100, 200, 300) contained in the group receives the synchronizing identifications and provides the multimedia data generated in the user terminal device with the received synchronizing identifications and sends the multimedia data provided with the synchronizing identifications to the central synchronizing unit (500),
the central synchronizing unit (500) receives the multimedia data provided with the synchronizing identifications and modifies the time information contained in the synchronizing identifications according to a chronological context of the multimedia data sent by the user terminal devices (100, 200, 300) and sends them to the user terminal devices for reproduction, and
the multimedia data provided with the modified synchronizing identifications are received at the user terminal devices (100, 200, 300) and are reproduced in the chronological context corresponding to the modified chronological information contained in the synchronizing identifications.

2. The method according to claim 1, **characterized in that** the central synchronizing unit (500) receives the multimedia data provided with the synchronizing identifications and modifies the time information contained in the synchronizing identifications according to control information, which takes into consideration the properties of the user terminal devices (100, 200, 300) sending and receiving the multimedia data and takes into consideration the properties of the transmission path (400).

3. The method according to claim 2, **characterized in that** the control information is contained in a control table (510) deposited at the central synchronization unit (500), which is used to generate the synchronizing identifications, which contain at least a context tag describing the type of use of the medium in the conversation, a conversation tag representing a categorization unit of all conversations to be managed by the central synchronization unit ZTU, and a media tag describing the type of medium.

4. The method according to claim 2 or 3, **characterized in that** the control information, according to which the time information contained in the synchronizing identifications is modified, is adjusted dynamically.

5. The method according to any of claims 1 to 4, where the multimedia data are transmitted in form of data packages and the data packages are associated to respective synchronizing identifications.

6. The method according to claim 5, where data packages are transmitted, which have a different periodic time, wherein the synchronizing identifications are generated corresponding to a periodic chronological sequence, the periodic time of which is equal to or shorter than the periodic time of the data packages with the shortest periodic time.

7. The method according to any of claims 1 to 6, **characterized in that** the synchronizing identifications contain a time stamp.

8. The method according to any of claims 1 to 6, **characterized in that** the synchronizing identifications contain a respective count value with reference to an agreed upon start point and corresponding to the respective time.

9. A software product, which is stored on a medium readable by a computer and having program codes of a computer program, which, when they are loaded into a memory of a computer, enable the computer to implement a method for transmitting data in a multimedia system, which comprises a group of user terminal devices (100, 200, 300), where multimedia data generated by the user terminal devices contained in the group are transmitted to one or more user terminal devices contained in the group and are reproduced there, if the computer program is executed on the computer, wherein the method includes the following steps:
generating, by the central synchronizing unit (500), of synchronizing identifications containing time information and sending the synchronizing identifications containing the time information to the user terminal devices (100, 200, 300) contained in the group, so that each user terminal device (100, 200, 300) contained in the group can receive the synchronizing identifications and can provide the multimedia data generated in the user terminal device with the received synchronizing identifications and can send the multimedia data provided with the synchronizing identifications to the central synchronizing unit (500),
- receiving, by the central synchronizing unit (500), of the multimedia data provided with the synchronizing identifications and modifying the time information contained in the synchronizing identifications according to a chronological context of the multimedia data sent by the user terminal devices (100, 200, 300) and sending modified multimedia data for reproduction to the user terminal devices.

10. A multimedia system comprising a group of user terminal devices (100, 200, 300) and a device for controlling the transmission of data in the multimedia system, wherein multimedia data generated by the user terminal devices contained in the group are transmitted to one or more user terminal devices contained in the group and are reproduced there, wherein
the device comprises a central synchronizing unit (500), which is provided for generating synchronizing identifications containing a time information and for sending the same to each of the user terminal devices (100, 200, 300) contained in the group,
wherein the user terminal devices are configured to receive the synchronizing identifications and to provide the multimedia data generated in the user terminal device with the received synchronizing identifications, and send the multimedia data provided with the received synchronizing identifications to the central synchronizing unit, and
in that the central synchronizing unit (500) is provided to receive the multimedia data provided with the synchronizing identifications from the user terminal devices (100, 200, 300) and to modify the time information contained in the synchronizing identifications according to a chronological context of the multimedia data sent by the user terminal devices and to send it to the user terminal devices,
wherein the multimedia data provided with the modified synchronizing identifications are provided for reception at the user terminal devices (100, 200, 300) and for reproduction in the chronological context corresponding to the modified chronological information contained in the synchronizing identifications.

## Revendications

1. Procédé de transmission de données dans un système multimédia, qui comporte un groupe d'appareils terminaux d'abonné (100, 200, 300), avec lequel des données multimédias générées par des appareils terminaux d'abonné contenus dans le groupe sont transmises à un ou plusieurs appareils terminaux d'abonné contenus dans le groupe et y sont là reproduites, dans lequel
une unité centrale de synchronisation (500) génère des marques de synchronisation contenant une information temporelle et les envoie aux appareils terminaux d'abonné (100, 200, 300) contenus dans le groupe,
chaque appareil terminal d'abonné (100, 200, 300) contenu dans le groupe reçoit les marques de synchronisation et pourvoit les données multimédias, générées dans l'appareil terminal d'abonné, des marques de synchronisation reçues et envoie les données multimédias pourvues des marques de synchronisation reçues à l'unité centrale de synchronisation (500),
l'unité centrale de synchronisation (500) reçoit les données multimédias pourvues des marques de synchronisation et modifie l'information temporelle contenue dans les marques de synchronisation conformément à un contexte temporel des données multimédias envoyées par les appareils terminaux d'abonné (100, 200, 300) et l'envoie aux appareils terminaux d'abonné aux fins de reproduction ; et
les données multimédias pourvues des marques de synchronisation modifiées sont reçues au niveau des appareils terminaux d'abonné (100, 200, 300) et sont reproduites dans le contexte temporel conformément à l'information temporelle modifiée contenue dans les marques de synchronisation.

2. Procédé selon la revendication 1, **caractérisé en ce que** l'unité centrale de synchronisation (500) reçoit les données multimédias pourvues des marques de synchronisation et modifie l'information temporelle contenue dans les marques de synchronisation conformément à des informations de commande qui tiennent compte des propriétés des appareils terminaux d'abonné (100, 200, 300) envoyant et recevant les données multimédias et des propriétés du chemin de transmission (400).

3. Procédé selon la revendication 2, **caractérisé en ce que** les informations de commande sont contenues dans une table de commande (510) déposée au niveau de l'unité centrale de synchronisation (500), laquelle table est employée pour la génération des marques de synchronisation, qui contiennent au moins une balise de contexte décrivant le type d'emploi du support dans la conversation, une balise de conversation représentant une unité de classement de toutes les conversations gérées par l'unité centrale de synchronisation ZTU et une balise de support décrivant le type du support.

4. Procédé selon la revendication 2 ou 3, **caractérisé en ce que** les informations de commande, conformément auxquelles l'information temporelle contenue dans les marques de synchronisation est modifiée, sont adaptées de manière dynamique.

5. Procédé selon l'une quelconque des revendications 1 à 4, avec lequel les données multimédias sont transmises sous forme de paquets de données et des marques de synchronisation respectives sont attribuées aux paquets de données.

6. Procédé selon la revendication 5, dans lequel sont transmis des paquets de données qui présentent une durée de période différente, dans lequel les marques de synchronisation sont générées conformément à une série temporelle périodique dont la durée de période est égale à ou plus courte que la durée de période des paquets de données avec la plus courte durée de période.

7. Procédé selon l'une quelconque des revendications 1 à 6, **caractérisé en ce que** les marques de synchronisation contiennent une estampille temporelle.

8. Procédé selon l'une quelconque des revendications précédentes 1 à 6, **caractérisé en ce**
**que** les marques de synchronisation contiennent chacune une valeur de comptage relative à un instant de démarrage conclu et correspondant au temps respectif.

9. Procédé logiciel, qui est stocké sur un support lisible par un ordinateur et comprend des codes de programme d'un programme d'ordinateur qui, lorsqu'ils sont chargés dans la mémoire d'un ordinateur, rendent l'ordinateur capable d'exécuter un procédé de transmission de données dans un système multimédia, qui comporte un groupe d'appareils terminaux d'abonné (100, 200, 300), avec lequel des données multimédias générées par des appareils terminaux d'abonné contenus dans le groupe sont transmises à un ou plusieurs appareils terminaux d'abonné contenus dans le groupe et y sont là reproduites lorsque le programme d'ordinateur est exécuté sur l'ordinateur, dans lequel le procédé comprend les étapes suivantes :
- la génération, par l'unité centrale de synchronisation (500), de marques de synchronisation contenant une information temporelle et l'envoi des marques de synchronisation contenant l'information temporelle aux appareils terminaux d'abonné (100, 200, 300) contenus dans le groupe de sorte que chaque appareil terminal d'abonné (100, 200, 300) contenu dans le groupe peut recevoir les marques de synchronisation et peut pourvoir les données multimédias, générées dans l'appareil terminal d'abonné, des marques de synchronisation reçues et peut envoyer les données multimédias pourvues des marques de synchronisation reçues à l'unité centrale de synchronisation (500),
- la réception, par l'unité centrale de synchronisation (500), des données multimédias pourvues des marques de synchronisation et la modification de l'information temporelle contenue dans les marques de synchronisation conformément à un contexte temporel des données multimédias envoyées par les appareils terminaux d'abonné (100, 200, 300) et l'envoi des données multimédias modifiées aux fins de reproduction.

10. Système multimédia, comportant un groupe d'appareils terminaux d'abonné (100, 200, 300) et un dispositif de commande de la transmission de données dans le système multimédia, dans lequel des données multimédias générées par des appareils terminaux d'abonné contenus dans le groupe sont transmises à un ou plusieurs appareils terminaux d'abonné contenus dans le groupe et y sont là reproduites, dans lequel
le dispositif comporte une unité centrale de synchronisation (500) qui est prévue pour la génération de marques de synchronisation contenant une information temporelle et pour l'envoi de celles-ci à chacun des appareils terminaux d'abonné (100, 200, 300) contenus dans le groupe, dans lequel les appareils terminaux d'abonné sont formés pour recevoir les marques de synchronisation et pour pourvoir les données multimédias, générées dans l'appareil terminal d'abonné, des marques de synchronisation reçues et pour envoyer les données multimédias pourvues des marques de synchronisation reçues à l'unité centrale de synchronisation, et
l'unité centrale de synchronisation (500) est prévue pour la réception des données multimédias, pourvues des marques de synchronisation, depuis les appareils terminaux d'abonné (100, 200, 300) et pour la modification de l'information temporelle contenue dans les marques de synchronisation conformément à un contexte temporel des données multimédias envoyées par les appareils terminaux d'abonné et pour l'envoi aux appareils terminaux d'abonné,
dans lequel les données multimédias pourvues des marques de synchronisation modifiées sont prévues pour l'envoi aux appareils terminaux d'abonné (100, 200, 300) et pour la reproduction dans le contexte temporel conformément à l'information temporelle modifiée contenue dans les marques de synchronisation.
